(19) Europäisches Patentamt
European Patent Office
Office européen des brevets

(11) **EP 1 523 144 A2**

(12) **EUROPÄISCHE PATENTANMELDUNG**

(43) Veröffentlichungstag:
**13.04.2005 Patentblatt 2005/15**

(51) Int Cl.⁷: **H04L 25/06**

(21) Anmeldenummer: **04021993.3**

(22) Anmeldetag: **16.09.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **25.09.2003 DE 10344756**

(71) Anmelder: **Micronas GmbH
79108 Freiburg (DE)**

(72) Erfinder: **Bock, Christian, Dr.
79108 Freiburg (DE)**

(74) Vertreter:
**Patentanwälte Westphal, Mussgnug & Partner
Am Riettor 5
78048 Villingen-Schwenningen (DE)**

(54) **Verfahren und Schaltungsanordnung zum Entscheiden eines Symbols im komplexen Phasenraum eines Quadratumodulationsverfahrens**

(57) Die Erfindung bezieht sich auf ein Verfahren und eine Schaltungsanordnung zum Entscheiden eines Symbols beim Empfang eines mit einem Quadratursignalpaar gekoppelten Signals, bei dem die Entscheidung durch Analyse des Abstandes zumindest eines Empfangspunktes zu zumindest einem Sollpunkt im komplexen Raum getroffen wird.

Zur Verbesserung der Fangbereiche bzw. Entscheidungsbereiche bei höherwertigen Modulationsverfahren auch im Bereich höherer Radien wird vorgeschlagen, dass der Abstand im nicht oder nicht ausschließlich kartesisch komplexen Phasenraum analysiert wird, wobei das komplexe Signal zur Abstandsanalyse in vorzugsweise den polaren Koordinatenraum (R, α) als nicht kartesisch komplexem Phasenraum transformiert wird.

$$\min\left(2\cdot|R_s - R_{se}| + |\alpha_s - \alpha_{se}|\right)$$

Fig. 7

**Beschreibung**

Die Erfindung bezieht sich auf ein Verfahren zum Entscheiden eines Symbols beim Empfang eines mit einem Quadratursignal gekoppelten Signals gemäß den oberbegrifflichen Merkmalen des Patentanspruchs 1 bzw. eine Schaltungsanordnung zum Durchführen eines solchen Verfahrens.

Mit Hilfe von kabel- oder funkgestützten Kommunikationssystemen übertragene digitale Signale, die auch als Symbole bezeichnet werden, stellen in codierter Form einen ein- oder mehrstelligen Digitalwert dar. Die Codierung erfolgt für die Übertragung über das Quadratursignalpaar, das einem Zeiger entspricht, der zu bestimmten Zeitpunkten diskrete Positionen im kartesischen Amplituden- und Phasenraum des Quadratursignalpaares einnimmt. Übliche derartige Übertragungsverfahren sind QAM (Quadrature Amplitude Modulation) und PSK (Phase Shift Keying).

In einem üblichen Empfänger zum Empfang digitaler Signale mischt ein komplexer Multiplizierer oder Mischer, der von einem Lokaloszillator angesteuert wird, das empfangene, auf einen Träger modulierte QAM-Signal frequenz- und phasenrichtig in das Basisband der Schaltungsanordnung. Bei einer digitalen Verarbeitung kann dies vor oder nach einer A/D-Umsetzung (A/D: Analog/Digital) erfolgen. Das Signal wird entweder mit dem Symboltakt oder einem Vielfachen davon abgetastet und digitalisiert, oder der Digitalisierungstakt ist gegenüber dem erforderlichen Symboltakt freilaufend. In diesem Fall wird das Symbol letztendlich über eine rein digitale Abtastratenwandlung auf den Symboltakt oder ein Vielfaches davon umgesetzt. Verstärkungsregelungen sorgen dafür, dass der jeweilige Aussteuerbereich ausgenutzt wird und dass die empfangenen Symbole richtig auf die Symbolentscheiderstufe abgebildet werden. Ein adaptiver Entzerrer (Equalizer) vermindert die Intersymbolinterferenz, die in linearen Verzerrungen des Senders, der Übertragungsstrecke oder des Empfänger ihren Ursprung hat.

Bei hochwertigen Demodulatoren für QAM- oder PSK-Signale benötigen die Regelschaltungen für die Frequenz- und Phasenregelung des Lokaloszillators, für die Verstärkungsregelung, für die Rückgewinnung des Symboltaktes und für den adaptiven Entzerrer sowohl die empfangenen Symbole als auch diejenigen Elemente des vorgegebenen Symbolalphabets, die von einer Entscheiderstufe als wahrscheinlichste angesehen werden. Diese Art der Regelung über das entschiedene Symbol wird als "entscheidungsrückgekoppelte" Regelung bezeichnet und setzt für richtige Regelspannungen korrekte Symbolentscheidungen voraus.

Da bei den digitalen Demodulatoren nach dem Stand der Technik die entscheidungsrückgekoppelten Regelungen miteinander verkoppelt sind, ist das Einrasten schwierig, solange die Regelung für den Lokaloszillator, der das Empfangssignal in das Basisband mischt, frequenz- und phasenmäßig noch nicht stabil ist. Oft gelingt das Einrasten nur, wenn die jeweiligen Frequenzen und Phasen relativ dicht bei ihren Sollwerten liegen.

Demodulatoren für QAM- oder PSK-Signale benutzen üblicherweise eine Entscheidung, welche in der komplexen I/Q-Symbolebene die empfangenen Symbole nach dem geringsten Abstand zu Sollsymbolen zuordnet. Sind die Sollsymbole auf einem gleichmäßigen Raster angeordnet, entsteht ein Gittermuster für die Entscheidungen.

Eine solche Verfahrensweise ist mit Blick auf ein Signal mit additivem Gaußschen Rauschen optimal, jedoch ist im Vorhinein ein exaktes Wissen über die Trägerfrequenz und Trägerphase sowie über den Abtastzeitpunkt erforderlich. Ist die Trägerphase, insbesondere bei höherwertigen Modulationsverfahren, nur wenige Grad von der Sollphase entfernt, werden die Symbole im mittleren und äußeren Radienbereich falsch entschieden. Bei der 256-QAM genügt bereits eine Abweichung von ca. 3 Grad, um falsche Entscheidungen zu treffen. Bei einem Frequenzoffset mit akkumulierendem Phasenfehler ist diese Wirkung noch stärker, da nur jeweils wenige Winkelgrad um eine Abweichung von 0°, bzw. auch 90°, 180°und 270° bei einer Modulobehandlung der Quadranten, eine korrekte Regelspannung erzeugt wird.

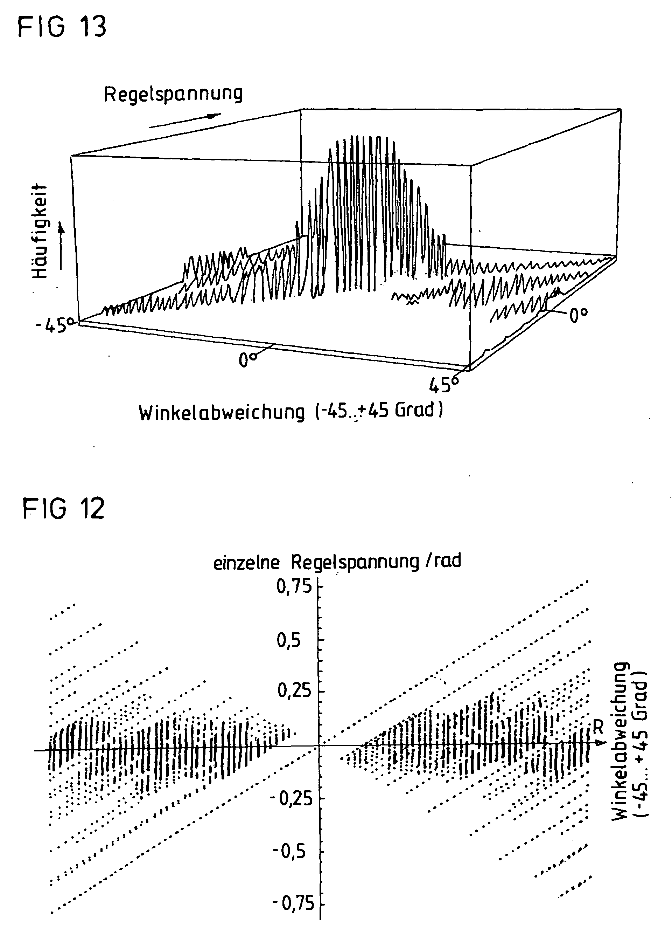

In Fig. 12 sind die Phasenabweichungen zwischen empfangenem und entschiedenem Symbol über einer Winkelabweichung von -45 ... + 45 Grad aufgetragen. Die jeweilige Phasenabweichung dient der Phasenregelung des Lokaloszillators als Regelspannung. Die Verteilung weist eine zentrale Diagonale auf, die vom negativen Quadranten über den Nullpunkt in den positiven Quadranten führt. Bei dem dargestellten Beispiel der gesamten Einzelentscheidungen über die Winkelabweichung in einem Quadranten von 256-QAM ist die Verteilung der einzelnen Regelspannungen so, dass zumindest mit Blick auf das Vorzeichen die richtige mittlere Regelspannung herauskommt. Jedoch ist die momentane Regelspannung oftmals nicht korrekt.

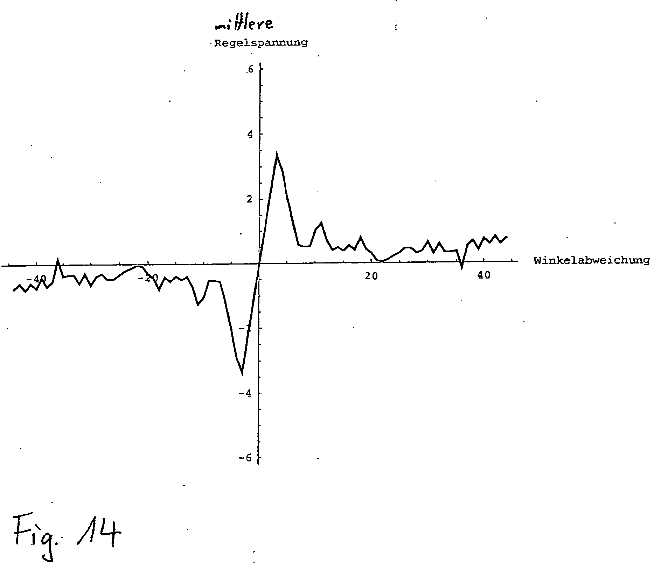

Fig. 13 stellt eine entsprechende Häufigkeitsverteilung der Regelspannung über die Winkelabweichung bei 256-QAM über der komplexen Ebene bei einer Winkelabweichung von - 45 ... + 45 Grad dar. Die mittlere Regelspannung, d. h. Summe je Winkel über die Winkelabweichung bei 256-QAM, ist Fig. 14 entnehmbar. Sowohl aus Fig. 13 als auch Fig. 14. ist leicht zu erkennen, dass nur im Zentralbereich immer richtige Einzelentscheidungen für die Regelspannungen getroffen werden. In den Randbereichen ist von fehlerhaften Einzelentscheidungen auszugehen.

Aus EP 0571788 A2 ist eine Träger- und Phasenregelung bekannt, bei welcher nur die inneren vier Symbole der I/Q-Ebene mit einer zusätzlichen Hysterese im Rahmen einer reduzierten Konstellation verwendet werden. Bei höherwertigen Modulationsverfahren mit einer gleichmäßigen Verteilung beträgt die Häufigkeit dieser Symbole jedoch nur einen sehr geringen Anteil, bei gleich verteiltem 256-QAM beispielsweise nur ca. 1,6%.

Aus US 5,471,508 ist eine Tracking- bzw. Nachführungsbetriebsart bekannt, mittels der die Regelung zunächst mit einem reduzierten Modulationsalphabet im I/Q-Raum arbeitet, wobei nur große Radien betrachtet werden.

Aus DE 199 28 206 A1 ist ein Verfahren bekannt, bei dem die komplexe I/Q-Ebene in kleinere Quadrate aufgeteilt wird, wodurch eine eindeutigere mittlere Regelspannung erhalten werden kann. Dieses Verfahren macht jedoch den Einsatz großer Tabellen erforderlich.

Bei einem Verfahren aus DE 41 00 099 C1 werden nur die Ecken des I/Q-Modulationsalphabets betrachtet, wodurch wiederum viele Symbole verloren gehen. Außerdem wird eine Regelung vorgeschlagen, die für einen effektiven Einsatz zu ungenau ist.

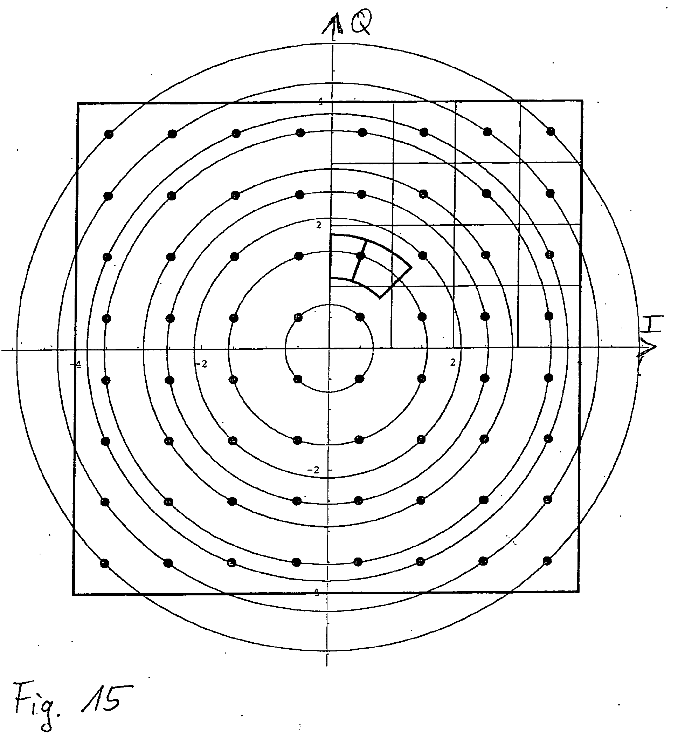

EP 0249045 B1 (US 4,811,363, DE 36 19 744 A1) schlägt ein Verfahren mit einer grundsätzlicheren Vorgehensweise vor, bei dem eine zweistufige Entscheidung vollzogen wird. In einem ersten Schritt wird für einen Sollradius entschieden und danach in einem zweiten Schritt auf diesem entschiedenen Sollradius dann der wahrscheinlichste Sollphasenpunkt angenommen. Bekannt ist somit auch eine Untergliederung der komplexen Ebene mit einer Orientierung an den Kreisradien, auf welchen die Sollsymbole angeordnet sind, so dass die Grenzen der Phasenregelung in radialer Richtung durch Ringsektoren bestimmt werden. Diese Entscheidungsverfahren führen of zu falschen Regelspannungen, da die empfangenen Symbole üblicherweise nicht exakt auf den Sollpunkten liegen. Für Phasenkonstellationen von 16-QAM funktioniert ein solches Verfahren noch in akzeptablem Maß. Bei Betrachtung einer 64-QAM-Ebene sind jedoch 9 Radien zu berücksichtigen, die teilweise sehr eng benachbart liegen, wie dies aus Fig. 15 ersichtlich ist. Dargestellt sind in der komplexen I/Q-Ebene die Soll-Symbolpositionen von 64-QAM sowie die zugeordneten 9 Radien. In dem positiven Quadranten sind außerdem die Kästchen eines üblichen Gitterentscheidungssystems abgebildet. Ferner dargestellt ist ein kreissegmentförmiger Fangbereich um den zweiten Radius herum, der größtenteils innerhalb eines Kästchens liegt, aber auch in Nachbarkästchen hineinragt.

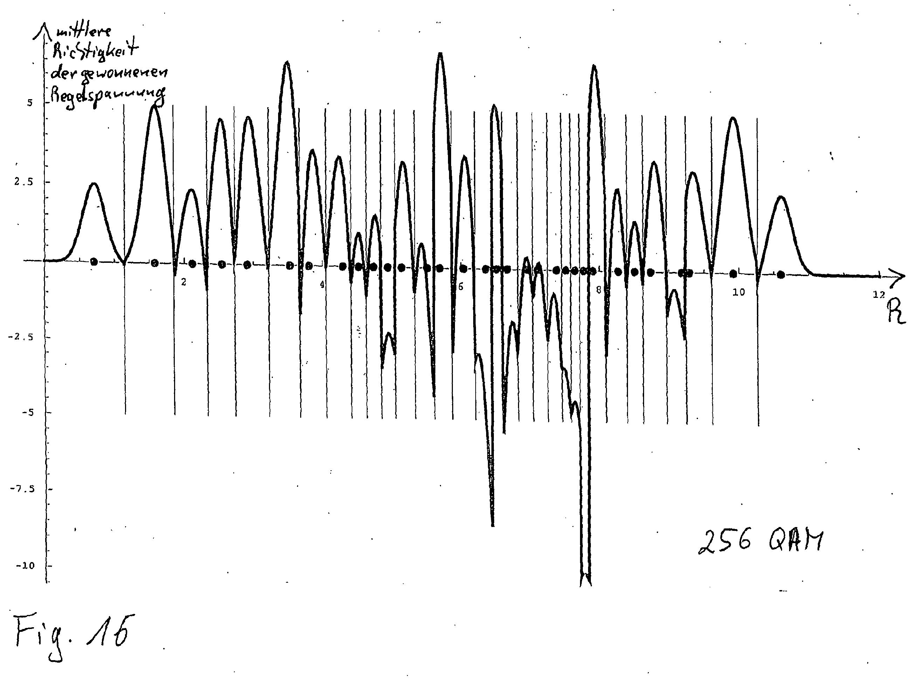

Bei 256-QAM liegen die Radiengrenzen bereits so dicht beieinander, dass insbesondere bei additivem Rauschen richtige Radienentscheidungen nur äußerst bedingt in einem ausreichenden Maße zu erhalten sind. Zur Verdeutlichung zeigt Fig. 16 die Verteilung der Radien eines 256-QAM-Empfangssignals. Die gesendeten Radien sind mit Gaußschem Rauschen gefaltet und über dem Radius R aufgetragen. Die Entscheidungsgrenzen für die Sollradien liegen in der Mitte zwischen zwei Sollradien, die durch Punkte dargestellt sind. Der Anteil der Verteilung, welcher einem falschen Sollradius zugeordnet wird, ist mit negativem Vorzeichen dargestellt. Für ein Einzelsignal würde das Signal unterhalb einer unteren und oberhalb einer oberen Entscheidungsgrenze einem falschen Radius zugeordnet. Die in Fig. 16 dargestellte Sollradienentscheidung ist über alle Konstellationspunkte eines Quadranten bei 256-QAM integriert. Die Radien haben dabei bis zu vier Sollsymbole.

Für den Fall derartiger Sollradienentscheidungen bei 256-QAM überwiegen erfahrungsgemäß schlechte Radienentscheidungen im mittleren Bereich, in dem die einzelnen Radien im komplexen I/Q-Raum sehr dicht beieinander liegen.

Ist bei einer Entscheidung ein falscher Sollradius entschieden worden, so kann zwangsläufig auch die nachfolgende Entscheidung für ein Symbol auf diesem Radius nur noch falsch getroffen werden. Somit ist auch die vorstehend aufgeführte Verfahrensweise für höherwertige Modulationsverfahren nicht oder nur allenfalls bedingt einsetzbar.

In EP 0 281 652 wird ein Verfahren beschrieben, das einer frühzeitigen falschen Entscheidung für einen Sollradius dadurch vorbeugt, dass die erste Entscheidung statt eines Sollradius eine Gruppe von Sollradien auswählt, die in einem Toleranzbereich um den Radius des empfangenden Signals liegen, bevor in einem zweiten Schritt eine Entscheidung für eine Phase aus der Menge aller auf den ausgewählten Sollradien vorkommenden Sollphasenwerten stattfindet. Eine weitere Bewertung des Abstandes zwischen empfangenem Symbol und ausgewähltem Symbol findet nicht statt.

Die Aufgabe der Erfindung besteht darin, ein Verfahren zum Entscheiden eines Symbols beim Empfang eines mit einem Quadratursignalpaar gekoppelten Signals zu verbessern bzw. eine entsprechende Schaltungsanordnung zum Durchführen eines solchen Verfahrens bereitzustellen.

Diese Aufgabe wird durch das Verfahren zum Entscheiden eines Symbols beim Empfang eines mit einem Quadratursignalpaar gekoppelten Signals mit den Merkmalen des Patentanspruchs 1 gelöst. Eine Schaltungsanordnung zum Durchführen eines solchen Verfahrens ist Gegenstand des Patentanspruchs 11.

Ausgegangen wird von einem Verfahren zum Entscheiden eines Symbols beim Empfang eines mit einem Quadratursignalpaar gekoppelten Signals, bei dem die Entscheidung durch Analyse des Abstands zumindest eines Empfangspunkts zu zumindest einem Sollpunkt des Symbols im komplexen Raum getroffen wird. Die vorteilhafte Lösung besteht darin, dass der Abstand im nicht oder nicht ausschließlich kartesischen komplexen Phasenraum analysiert und davon abhängig die Entscheidung getroffen wird.

Statt einer reinen Kästchenentscheidung für ein bestimmtes Sollsymbol oder einer reinen Radienentscheidung für einen bestimmten Sollradius mit nachfolgender Bestimmung der Sollphase liegt somit eine kombinierte Verfahrensweise für die Entscheidung vor, welche gleichzeitig radiale und phasenabhängige Aspekte berücksichtigt.

Bestimmt werden bei dieser Verfahrensweise somit nicht nacheinander in einem ersten Schritt für ein empfangenes Symbol besonders geeignete Radien, um in einem nachfolgenden Schritt dann auf diesem Radien einen geeigneten Winkel zu suchen, sondern anstelle dessen werden nunmehr Radius und Winkel gleichzeitig in einer einzigen Entscheidung betrachtet, indem der Abstand zwischen einem Empfangspunkt und einem Sollpunkt betrachtet wird.

Vorteilhafte Ausgestaltungen sind Gegenstand abhängiger Ansprüche.

Vorteilhafterweise wird die Analyse im polaren Koordinatenraum durchgeführt, wozu der kartesische Phasenraum in einen polaren Koordinatenraum transformiert wird. In diesem finden dann die Entscheidungen oder eine Vorentscheidung statt. Vorteilhafterweise können bei einer kombinierten Betrachtung von Größen, die von der radialen Komponente und/oder der Phasenkomponente abhängig sind, Entscheidungsgrenzen flexibel dem jeweiligen Erfordernissen angepasst gesetzt werden. Dazu werden Variablen festgelegt, welche je nach Erfordernis abhängig dynamisch belegt werden.

Die sich dadurch ergebende größere Toleranz gegenüber Phasenfehlern ist insbesondere bei einer Decision-Feedback-Regelung im Hunting-Modus wichtig, in dem Empfangsfrequenz und Empfangsphase noch nicht eingerastet sind.

Eine Kombination von polaren und kartesischen Entscheidungen bietet insbesondere bei Signalen mit additivem Rauschen eine gute Leistungsfähigkeit.

Prinzipiell können auch andere Transformationsverfahren benutzt werden, je nachdem welches Koordinatensystem sich für die jeweiligen Zielsetzungen als geeignet erweist, um optimale Entscheidungen zu erhalten.

Als radien- und phasenabhängiges Kriterium für die Entscheidung dient insbesondere die Betrachtung und Analyse eines euklidischen Abstands des Empfangspunkts zu den möglichen Sollpunkten. Dabei wird vorteilhafterweise ein Faktor eingeführt, welcher die Wichtung von Radius- und Phasen-/Winkelfehler zueinander festlegt, um je nach Signalzustand eine optimale Wichtung zu erhalten. Vorteilhafterweise kann der variable Faktor dynamisch an die jeweiligen Empfangsbedingungen angepasst werden, so dass eine Automatisierung je nach momentanen Empfangsbedingungen vorgesehen werden kann.

Zusätzlich oder alternativ können auch die Summen der radialen Projektionen und der Winkel-Projektionen des Abstands zwischen Empfangspunkt und Sollpunkten analysiert werden. Auch dabei wird vorteilhafterweise eine Wichtung mit Hilfe eines dynamisch anpassbaren Faktors vorgenommen.

Besonders vorteilhaft ist eine Kombination von derartigen Analysen und Bestimmungen aus verschiedenen Koordinatensystemen, beispielsweise die Analyse einerseits im polaren Koordinatensystem und andererseits im kartesischen Koordinatensystem, wobei eine gemeinsame Bewertung vorgenommen wird. Auch dabei ist wieder ein Wichtungsfaktor vorteilhaft einsetzbar, um eine dynamische Anpassung an die Empfangsbedingungen zu ermöglichen.

Um relevante zu prüfende Sollphasenpunkte zu identifizieren, kann ein Hilfsentscheider (Slicer) verwendet werden.

Eine Schaltungsanordnung zum Durchführen eines solchen Verfahrens besteht aus im Wesentlichen den üblichen Bauelementen eines Empfängers bzw. Dekoders. Nach der Umsetzung des Signals aus dem I/Q-Koordinatensystem in polare Koordinaten wird nachfolgend die Symbolentscheidung getroffen. Dazu werden Daten hinzugezogen, die aus einer Minimalisierungsbetrachtung der verschiedenen analysierbaren Parameter Phase, Radius, I- und/ oder Q-Koordinate stammen.

Eine Anwendung des Verfahrens bzw. einer entsprechenden Schaltungsanordnung bietet sich insbesondere bei binären oder komplexen digitalen Modulationsverfahren wie QAM an. Derartige Modulationsverfahren werden von den neueren Rundfunk-, Fernseh- und Datendiensten über Kabel, Satellit und terrestrisch benutzt.

Ein Ausführungsbeispiel der Erfindung und verschiedene Ausführungsformen dazu werden nachstehend anhand der Zeichnung näher erläutert. Es zeigen:

Fig. 1         eine Phasenkonstellation des ersten Quadranten von 64-QAM, bei dem die Phase über dem Radius dargestellt ist;

Fig. 2, 3         Phasenkonstellationen in der polaren Koordinatenebene mit verschieden gewählten Entscheidungsparametern;

Fig. 4, 5         Abbildungen der I/Q-Ebene mit Entscheidungsgittern mit jeweils verschiedenen von Radien und Phasen abhängigen Minimierungsbedingungen;

Fig. 6, 7         Diagramme in der polaren bzw. kartesischen Ebene, die statt der Minimierung des euklidischen Abstandes in einem entsprechend gewichteten R-$\alpha$-Koordinatensystem die Summe entsprechend gewichteter Radius- und Winkelprojektionen minimiert;

Fig. 8         einen Vergleich mittlerer Regelspannungen bei einer Entscheidung im polaren Koordinatenraum gegenüber einer herkömmlichen Entscheidungsweise;

Fig. 9, ein Diagramme im kartesischen Koordinatensystem mit kombinierten polaren und kartesischen Entscheidungskriterien;

Fig. 10, ein Diagramm mit Entscheidungskriterien wie in Fig. 6 und 7, bei denen die Menge der bei der Entscheidung zu berücksichtigenden Sollpunkte beschränkt wurde;

Fig. 11 ein Schaltungsdiagramm für einen Dekoder zum Entscheiden eines Symbols;

Fig. 12 - 14 Regelspannungen über der Winkelabweichung gemäß dem Stand der Technik in verschiedenen Darstellungsarten;

Fig. 15 eine Darstellung der komplexen I/Q-Ebene mit Symbolpositionen sowie Kästchen und Radien zur Symbolentscheidung gemäß dem Stand der Technik und

Fig. 16 das Ergebnis einer entsprechenden Sollradienentscheidung über alle Konstellationspunkte eines Quadranten bei einer 256-QAM bei überlagertem Gaußschem Rauschen.

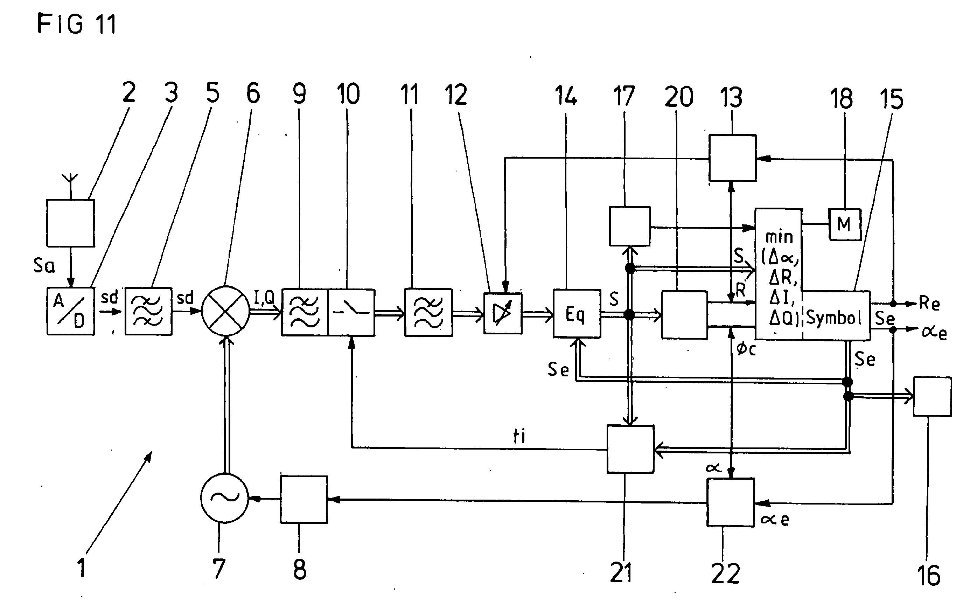

Wie dies aus Fig. 11 ersichtlich ist, besteht ein Demodulator 1 als beispielhafte Schaltungsanordnung zum Bestimmen und Entscheiden von Symbolen S, aus einem digitalisierten Signal sd, welches an ein Quadratursignalpaar eines Modulationsverfahrens, z. B. gemäß einem QAM-Standard, gekoppelt ist, aus einer Vielzahl von Einzelkomponenten. Diese können alle oder einzeln auch Bestandteil einer integrierten Schaltung sein. Insbesondere sind nachfolgend beschriebene Komponenten je nach Anwendungszweck weglassbar oder um weitere Komponenten ergänzbar. Auch ist die Weiterführung von Signalen als reelle Signale, komplexe Signale oder einzelne komplexe Signalkomponenten je nach Anwendungszweck und spezieller Schaltungsanordnung entsprechend anpassbar.

Bei der dargestellten Ausführungsform empfängt der Demodulator 1 an einem Eingang von einer Signalquelle 2, beispielsweise einem Tuner, ein analoges Signal sa. Dieses analoge Signal sa, welches üblicherweise in einer bandbegrenzten Zwischenfrequenzlage vorliegt, wird einem AD-Umsetzer 3 (AD: Analog/Digital) zum Umsetzen in ein digitales Signal sd zugeführt. Für den Fall, dass die weiteren Schaltungskomponenten keine Symbol-Abtasteinrichtung aufweisen sollten, weist der AD-Umsetzer 3 einen Eingang für ein Taktsignal bzw. Abtastsignal $t_i$ auf. Das digitale Signal sd wird vom AD-Umsetzer 3 zu einem Bandpass-Filter 5 geführt, welcher das digitale Signal von Gleichanteilen und störenden Oberwellen befreit.

Das vom Bandpass-Filter 5 ausgegebene Signal wird einem Quadraturumsetzer 6 zugeführt, welcher das digitale bzw. digitalisierte Signal sd in das Basisband umsetzt. Das Basisband entspricht den Anforderungen des Demodulators 1 und des verwendeten Modulationsverfahrens. Entsprechend gibt der Quadraturumsetzer das in die beiden Quadratursignalkomponenten I, Q des kartesischen Koordinatensystems aufgesplittete digitalisierte Signal sd aus. Zur Frequenzumsetzung wird der Quadraturumsetzer 6 üblicherweise mit zwei um 90° versetzten Trägern aus einem lokalen Oszillator 7 gespeist, dessen Frequenz und Phase durch eine Trägerregeleinrichtung 8 gesteuert wird.

Die Quadratursignalkomponenten I, Q, die von dem Quadraturumsetzer 6 ausgegeben werden, werden einem Tiefpass-Filter 9 zugeführt, welcher zur Beseitigung störender Oberwellen dient. Der Tiefpassfilter 9 und eine diesem nachfolgende Symbol-Abtasteinrichtung 10 bilden eine Schaltung zur Abtastratenwandlung aus. Zweckmäßigerweise weist die Symbol-Abtasteinrichtung 10 eine integrierte oder vorgeschaltete Abtastregelungseinrichtung auf. Die Steuerung der Symbol-Abtasteinrichtung 10 erfolgt über einen Eingang, dem das Abtastsignal $t_i$ von einer Taktsteuereinrichtung 21 zugeführt wird. Die Symbol-Abtastzeitpunkte $t_i$ orientieren sich im normalen Betriebszustand an der Symbolrate 1/T des verwendeten Modulationsverfahrens oder einem ganzzahligen Vielfachen davon und an der genauen Phasenlage der empfangenen Symbole.

Das Ausgangssignal der Abtasteinrichtung 10 wird mittels eines Tiefpass-Filters 11 mit einer Nyquist-Charakteristik gefiltert und einer Verstärkungsregelungseinrichtung 12 zugeführt. Die Verstärkungsregelungseinrichtung 12 dient dazu, den Aussteuerbereich eines Vorentscheiders 17 und eines Symbolentscheiders 15 kalibriert abzudecken.

Das Ausgangssignal der Verstärkungsregeleinrichtung 12 wird einem Entzerrer (Equalizer) 14 zugeführt.

Alternativ kann auch eine sich selbst regelnde Verstärkungsregelungseinrichtung eingesetzt werden, wobei dann insbesondere die eigenständige Amplitudensteuereinrichtung 13 entfallen kann.

Der Entzerrer 14 befreit die beiden Komponenten des Quadratursignalpaars I, Q von störenden Verzerrungen und stellt ein vorläufiges komplexes Symbol S an seinem Ausgang bereit. Das komplexe Symbol S wird von einem nachfolgenden Koordinatenumsetzer, vorliegend einem Quadraturumsetzer 20, vom kartesischen in das polare Koordinatensystem umgesetzt, d. h. aus einem abgetasteten Quadratursignalpaar I, Q wird ein polares Wertepaar R, $\alpha$ gebildet.

Mit den Polarkoordinaten werden somit eine Radiuskomponente R und eine Winkelkomponente $\alpha$ gemäß I = R·cos($\alpha$) und Q = R·sin($\alpha$) und gemäß den Beziehungen R = $\sqrt{(I^2 + Q^2)}$ und $\alpha$ = arctan(Q/I) gebildet. Damit steht das vorläufige Symbol S sowohl in kartesischen wie auch in polaren Koordinaten bereit. Alternativ können auch Koordinatenumsetzer anderer Art verwendet werden.

Bei der digitalen Signalverarbeitung wird für die Koordinatentransformation häufig das sogenannte Cordic-Verfahren verwendet, bei dem für die Umwandlung nur Additionen und Zweier-Multiplikationen, welche bei Binärzahlen durch einfache Stellenverschiebungen zu realisieren sind, verwendet werden. Alternativ sind auch andere Näherungsverfahren oder die Verwendung von Tabellen möglich. Die inverse Umsetzung, also die Umsetzung von polaren Signalkomponenten R und $\alpha$, in ihre Quadraturkomponenten I bzw. Q kann ebenfalls mit einem Cordic-Umsetzer, einer Tabelle oder einem Näherungsverfahren erfolgen.

Während eine Schaltungsanordnung mit einer Umsetzungseinrichtung 6 zum Umsetzen des digitalen Signals in den komplexen kartesischen Raum I, Q und einem Umsetzer 20 zum Umsetzen in polare Koordinaten beschrieben sind, sind auch Schaltungsanordnungen möglich, bei denen bereits der erste Umsetzer das digitale Signal sd in ein komplexes Signal mit polaren Koordinaten R, $\alpha$ umsetzt.

Aus derart bereitgestellten vorläufigen Symbolen werden mittels des Symbolentscheiders 15 sogenannte entschiedene Symbole Se gebildet, die insbesondere sowohl in kartesischen als auch in polaren Koordinaten vorliegen können. Zum Abspeichern der Werte dient zweckmäßigerweise eine Speichereinheit M, die mit einer oder mehreren der Schaltungseinrichtungen verbunden ist.

Diese Symbole S, Se und/oder deren Radialkomponente $R_e$ oder $\alpha_e$ werden dann weiteren digitalen Signalverarbeitungseinrichtungen 16 und vorzugsweise auch den entscheidungsrückgekoppelten Regelkreisen bzw. Komponenten im Demodulator 1 direkt oder indirekt zugeführt. Insbesondere erhält der Entzerrer 14 das Symbol Se, wie Trägerregeleinrichtung 8 ein aus der Differenz von empfangener Sollphase $\alpha$ und entschiedener Sollphase $\alpha_e$ in einer Steuerschaltung 22 abgeleitetes Regelsignal, die Verstärkungsregeleinrichtung 12 ein aus der Differenz von empfangenem Radius R und entschiedenem Radius $R_e$ in einer Amplitudensteuereinrichtung 13 abgeleitetes Regelsignal und die Abtasteinrichtung 10 ein aus einem Vergleich der empfangenen Symbolfolge und der entschiedenen Symbolfolge in der Taktsteuereinrichtung 21 abgeleitetes Abtastsignal $t_i$.

Zur Steuerung der Taktsteuereinrichtung 21, der Steuerschaltungen 13 und 22 zur Trägersteuerung bzw. Amplitudensteuerung und weiterer der Komponenten des Demodulators 1 stehen diese mit einer Steuereinrichtung in Verbindung. Die Steuereinrichtung bewirkt einen ordnungsgemäßen Ablauf und steuert die einzelnen Komponenten und Abläufe entsprechend Hart- oder Software gestützten Anweisungen. Vorzugsweise kann die Steuereinrichtung auch Funktionen einzelner der genannten Komponenten ganz oder teilweise in sich integriert aufweisen.

Im Gegensatz zur üblichen Symbolbestimmung mit Hilfe des Symbolentscheiders 15 im kartesischen komplexen Koordinatenraum I, Q wird die Symbolentscheidung mittels des Symbolentscheiders 15 vorliegend im nicht kartesischen oder nicht vollständig im kartesischen komplexen Koordinatenraum durchgeführt.

Die Entscheidung, welche durch die Entscheidungseinrichtung 15 getroffen wird, wird nachfolgend anhand einer Vielzahl von Diagrammen anschaulich erläutert. Ziel ist dabei die gleichzeitige Betrachtung von Größen, welche von dem Radius R, dem Winkel $\alpha$ und/oder den kartesischen Koordinaten I und Q abhängig sind. Die Entscheidungseinrichtung 15 ist vorteilhafterweise mit einem Speicher M verbunden, in dem u.a. Vergleichsdaten hinterlegt sind.

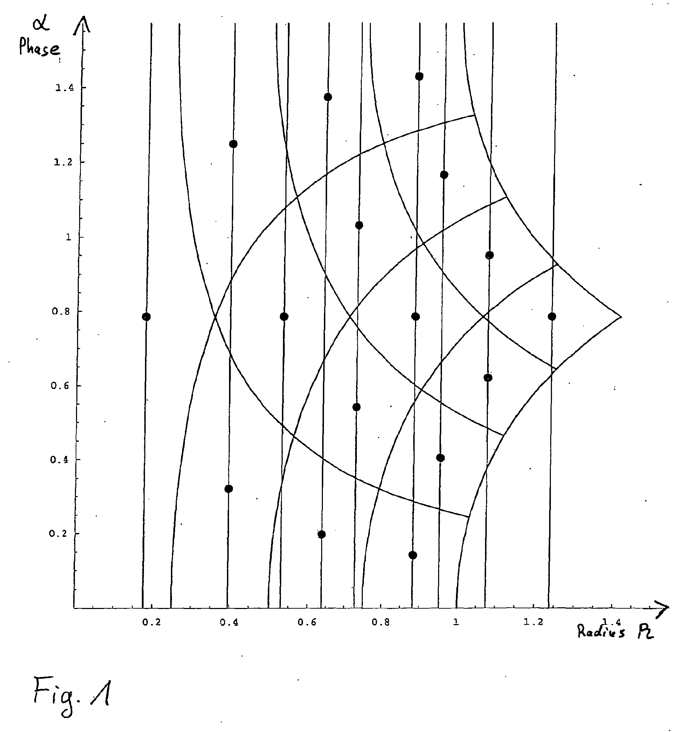

Wie dies aus Fig. 1 ersichtlich ist, ergibt sich eine Verzerrung der Entscheidungskästchen bzw. Entscheidungsradien, wenn die Symbole aus dem kartesischen I/Q-Koordinatensystem in ein polares Koordinatensystem mit den Variablen R und $\alpha$ transformiert und rechtwinkelig dargestellt werden. Abgebildet ist die Phasenkonstellation des ersten Quadranten von 64-QAM. Dargestellt ist dabei die Phase über dem Radius, wobei die senkrechten Linien die Sollradien und die eingezeichneten Hyperbeln das Entscheidungsgitter des kartesischen I/Q-Systems darstellen. In dieser verzerrten Darstellungsform können nun Entscheidungen, d. h. Zuordnungen des empfangenen Signals S(R, $\alpha$) zu einem Sollsignalpunkt Se(R, $\alpha$) durchgeführt werden.

Wegen des grundsätzlich unterschiedlichen Charakters der beiden variablen Radius R und Phase $\alpha$ ist dabei eine zusätzliche Bearbeitung zweckmäßig.

Erstens sollte dabei betrachtet werden, in welchem Verhältnis die beiden Koordinaten R, $\alpha$ stehen, wobei in der Fig. 1 eine nur arbiträr aufgetragene Achseneinteilung skizziert ist. Für die nachfolgenden Rechnungen ist Radius so kalibriert, dass die Längen beider Seiten des Kastens, der alle Phasenpunkte umschließt jeweils 1 ist, wodurch der Eckpunkt auf einen Wert von $\sqrt{2}$ fällt, und der Winkelumfang eines Quadranten $\pi/2$ ist.

Zweitens sollte betrachtet werden, wie die Abstandsfunktion in der polaren Koordinatenebene R, $\alpha$ zu bestimmen ist.

Aus Fig. 1 ist bereits zu erkennen, dass einigen Symbolpositionen jeweils im Vergleich zu den anderen Bestimmungssystemen relativ große Fangbereiche um die Sollpositionen herum zugeordnet werden können.

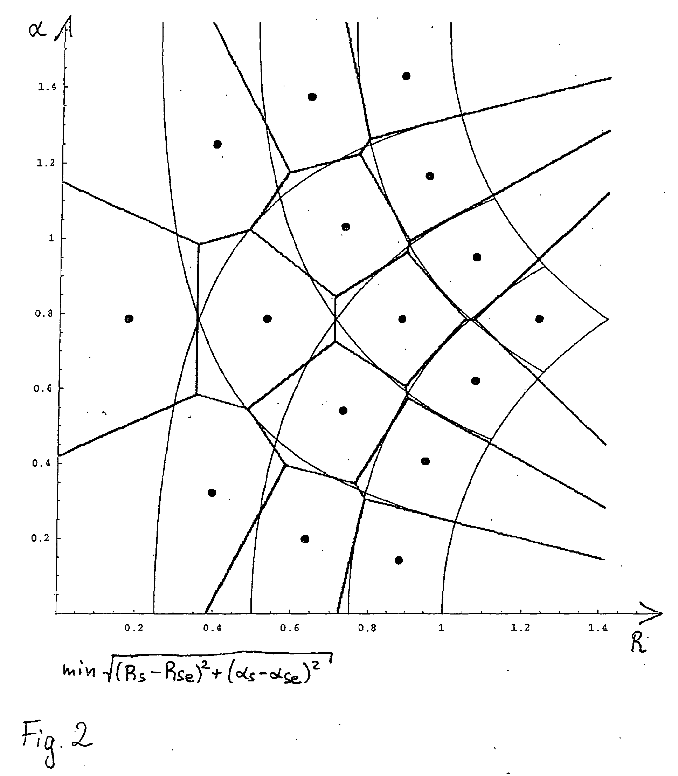

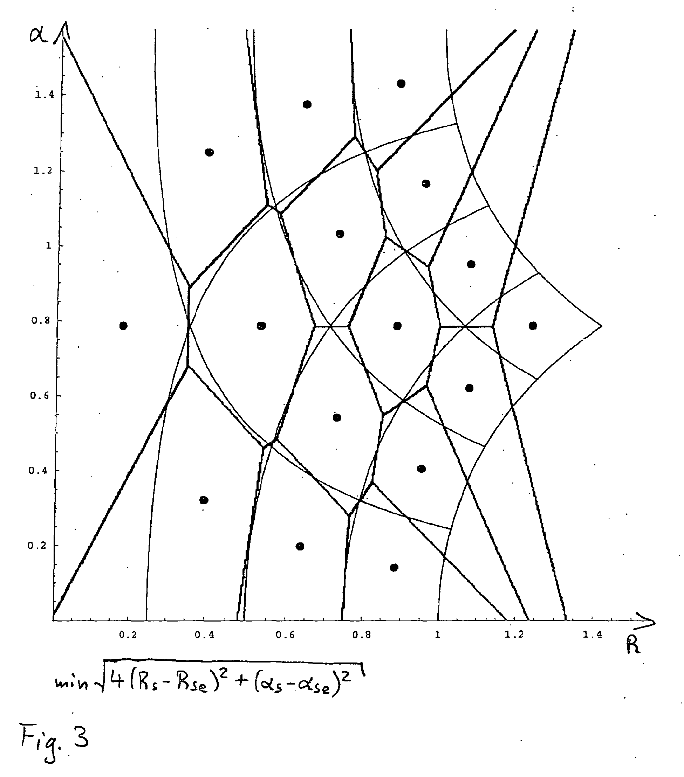

Um eine weitere Optimierung des Betrachtungssystems vorzunehmen, kann eine Minimierung des euklidischen Abstands der empfangenen Symbole S(R, $\alpha$) und der Sollsymbole $S_e$(R, $\alpha$) durchgeführt werden. Beispiele für solche Entscheidungsgitter für 64-QAM sind in der Fig. 2 und 3 für den ersten Quadranten eine polare Ebene R, $\alpha$ abgebildet ist. Dabei zeigt Fig. 2 die polare Ebene R, $\alpha$ mit einem Entscheidungsgitter, bei dem die Minimierung gemäß min ($\sqrt{(R_S - R_{Se})^2 + (\alpha_S - \alpha_{Se})^2}$) ($\sqrt{}$: Quadratwurzel aus) durchgeführt wird. Für den Bereich mit geringen Radien ergeben sich relativ große Zellen, während die Zellengrößen für größere Radien abnehmen.

Die Einführung von Vorfaktoren u, w erlaubt es, die Radiusund Winkelfelder unterschiedlich stark zu wichten gemäß $\min((\sqrt{2u}\cdot(R_S - R_{Se})^2 + w(\alpha_S - \alpha_{Se})^2))$. Da es nur auf die Bestimmung des Minimums und nicht auf absolute Werte ankommt, genügt ein entsprechend gewählter Faktor u. Für die weiteren Betrachtungen wird daher w = 1 gewählt.

Fig. 3 zeigt die Situation bei einer Betrachtung der Minimierung des euklidischen Abstandes unter Verwendung eines Radius-Faktors u mit u = 4, der so den radialen Anteil gegenüber dem Winkelanteil gemäß der Formel min $(\mathrm{SQRT}(u\cdot(R_S - R_{Se})^2 + (\alpha_S - \alpha_{Se})^2))$ stärker gewichtet. Dies führt zu einer Dehnung der Entscheidungsbereiche in Richtung der Winkelgröße $\alpha$.

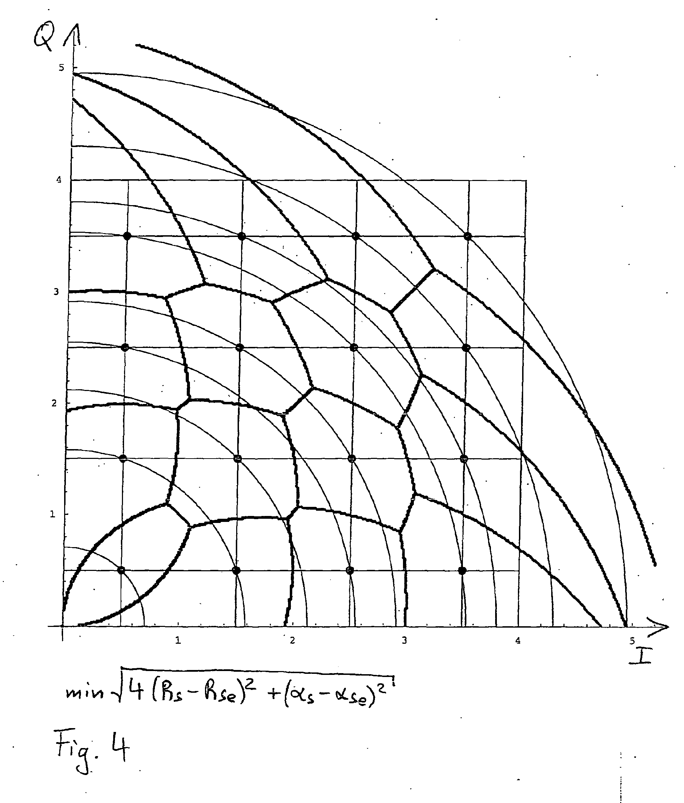

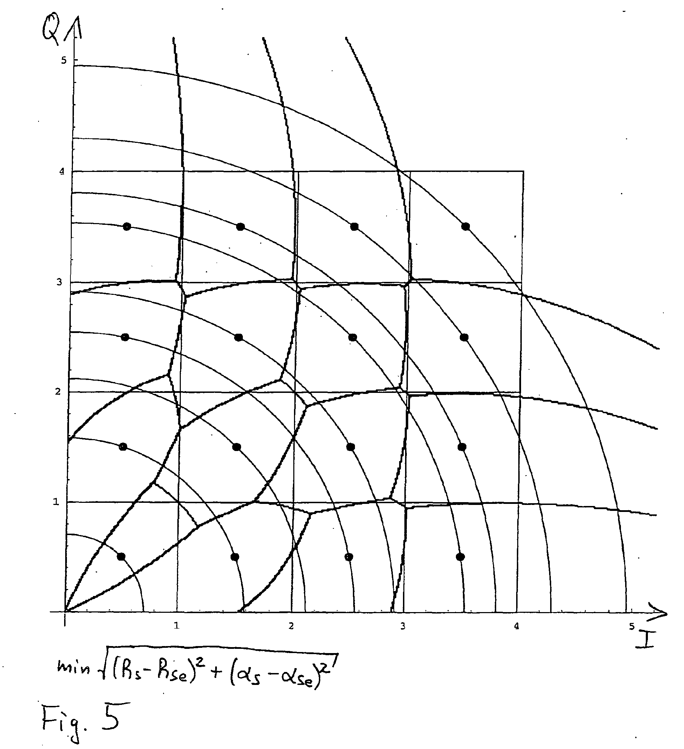

Eine Rücktransformation des Entscheidungsgitters des ersten Quadranten mit dem Faktor u = 4 aus Fig. 3 in die kartesische Ebene I/Q ist in Fig. 4 dargestellt. Obwohl im mittleren Radiusbereich die Entscheidungsfelder schon relativ schmal werden, schneiden die Grenzen im Außenbereich den äußersten Radius, was unerwünscht ist. Bei der Bestimmung des euklidischen Abstandes ohne einen Vorfaktor bzw. mit u = 1 gemäß Fig. 2 fächern somit die Außenbereiche weiter auf, wie dies aus Fig. 5 ersichtlich ist.

Alternativ kann beispielsweise auch eine Minimierungsentscheidung verwendet werden, die anstelle des euklidischen Abstandes die Summe der Projektionen auf R und $\alpha$ verwendet, d. h. eine Verfahrensweise gemäß min $(u|R_S-R_{Sw}| +|\alpha_S-\alpha_{Se}|)\cdot$

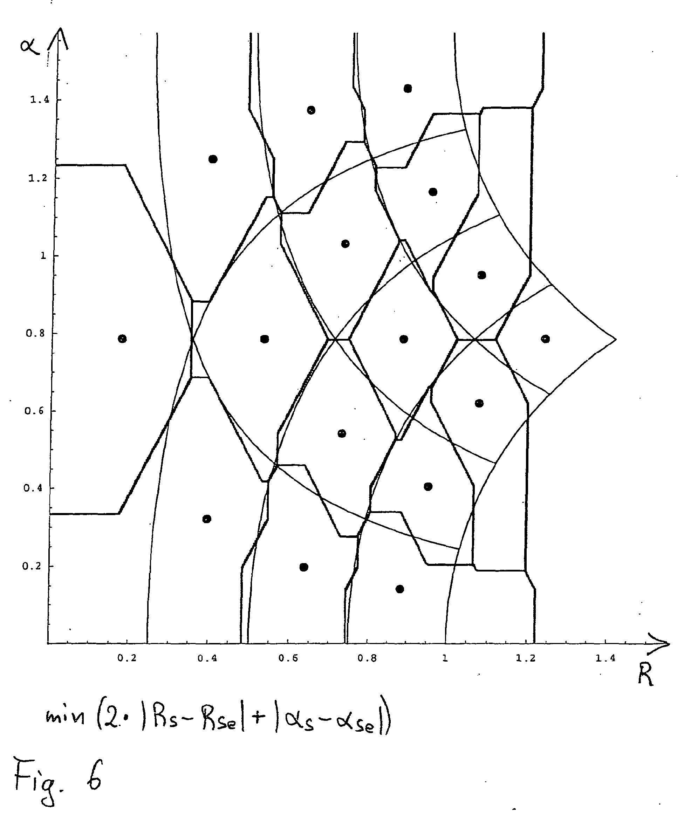

Wie dies aus Fig. 6 ersichtlich ist, welche die polare Koordinatenebene R, $\alpha$ mit einem Entscheidungsgitter mit dem Radius-Faktor u = 2 für die radiale Komponente zeigt, ist die Zelleinteilung bzw. die Einteilung der Fangbereiche vorteilhafter, als dies bei der Betrachtung der reinen euklidischen Abstände selbst mit der höheren Radius-Gewichtung von u = 4 war.

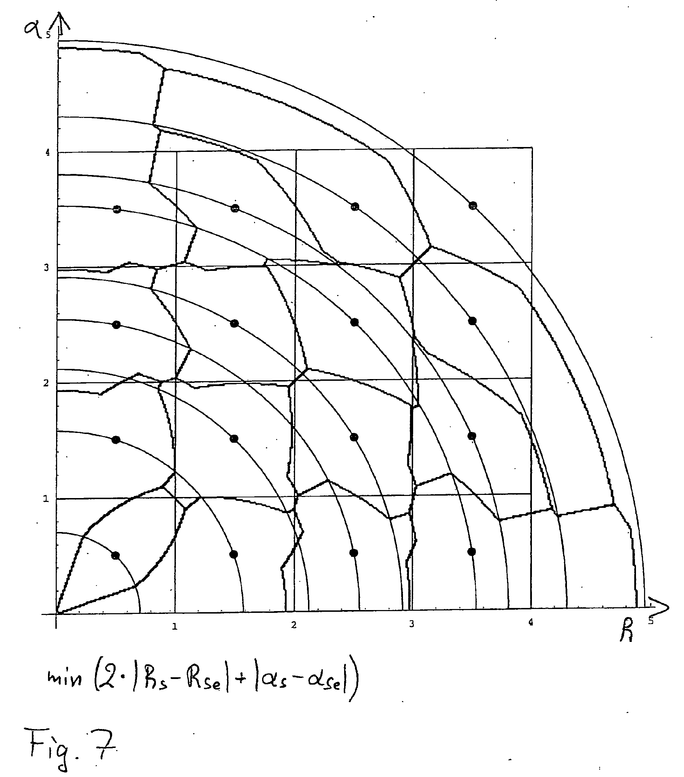

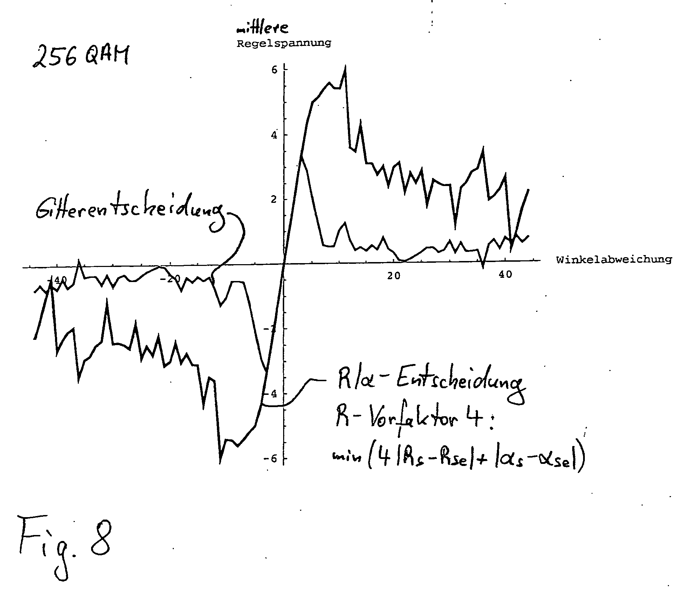

Fig. 7 zeigt die Rücktransformation des Entscheidungsgitters aus Fig. 6 in der entsprechenden I/Q-Koordinatenebene. Bei dieser Minimierung werden im Außenbereich die Radiengrenzen richtig getroffen, während im zentralen Bereich eine modifizierte Gitterentscheidungs-Verfahrensweise vorliegt. Wie aus der Darstellung der mittleren Regelspannung bei 256-QAM gemäß Fig. 8 ersichtlich ist, ist die Funktion der mittleren Phasenregelspannung wesentlich besser als bei einer reinen Gitterentscheidung gemäß dem Stand der Technik. Verwendet wurde eine Minimierungsfunktion mit der Summe der Projektionen und dem Radius-Vorfaktor u = 4, analog der Fig. 6, 7.

Da die Radiuskomponente $R_S$ und die Winkelkomponente $\alpha_S$ als Ergebnisse aus dem Koordinatenumsetzer 20 vorliegen und die radiale Komponente $R_{Se}$ und die Winkelkomponente $\alpha_{Se}$ für die Sollsymbole in Tabellen in dem Speicher M vorliegen, lässt sich eine solche Minimumbestimmung durch einfache Vergleiche relativ leicht ausführen. Während des Betriebes kann durch eine einfache Änderung des Vorfaktors, insbesondere Radius-Vorfaktors u, die Entscheidung an die momentanen Gegebenheiten, beispielsweise hohen Phasenjitter oder aber starkes Rauschen, angepasst werden.

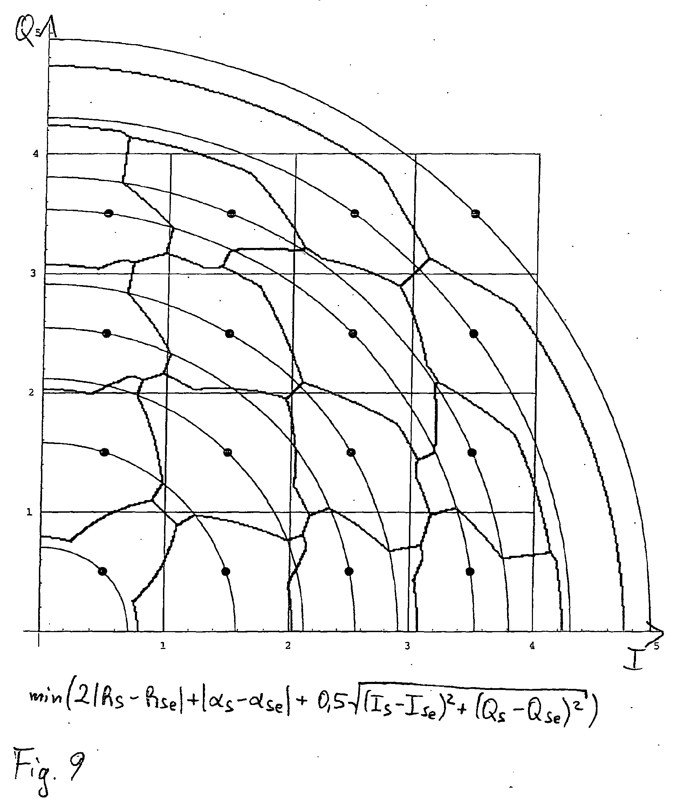

Aus Fig. 7 ist eine Krümmung der Entscheidungsgrenzen für die Fangbereiche beim innersten Symbol auffallend. Diese Krümmung entsteht aus der großen Winkelabweichung, welche an den Kanten des Quadranten die Entscheidung bestimmt. Durch das Hinzufügen eines Terms in der Minimumentscheidung, welcher die Abstände in der kartesischen komplexen I/Q-Ebene repräsentiert, kann dieser Effekt jedoch vermindert werden. Durch die Kombination beider Minimierungsverfahren können alle Entscheidungsfelder bzw. Fangfelder um die Sollphasenpunkte der Sollsymbole $S_e$ herum aufgeweitet werden, wie dies aus Fig. 9 ersichtlich ist. Fig. 9 zeigt die kartesische I/Q-Ebene mit einem Entscheidungsgitter gemäß min $(u|R_S - R_{Se}|+|\alpha_S - \alpha_{Se}| + v\sqrt{((I_S - I_{Se})^2 + (Q_S - Q_{Se})^2)})$ mit Koordinatensystem-Auswahl-Vorfaktoren u = 4 und v = 0,5. Bei dieser Betrachtungsweise können beliebige und dynamisch veränderbare Kombinationen eingestellt werden.

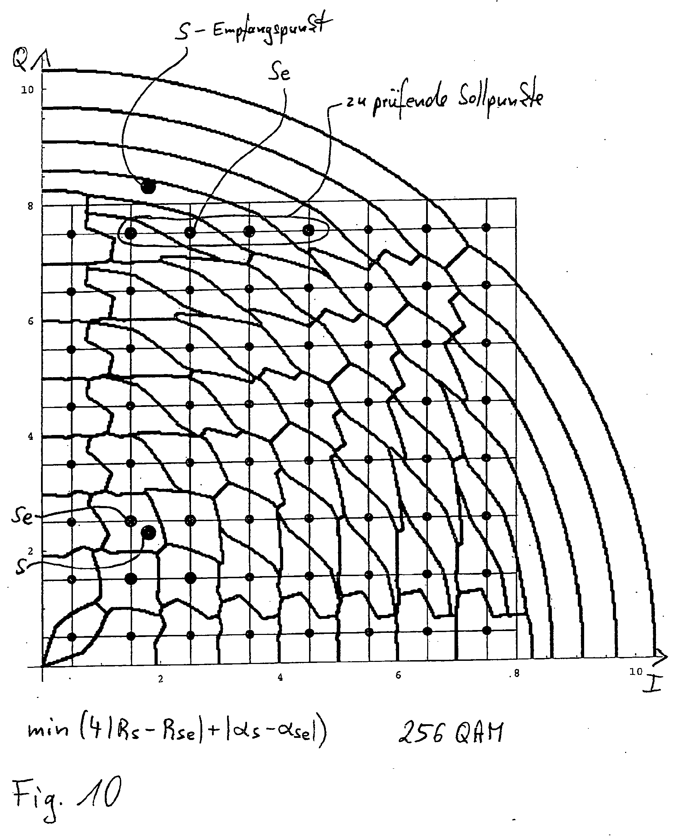

Um den Aufwand der Minimum-Berechnung zu verkleinern, kann die Anzahl der zu prüfenden Sollsymbole Se geeignet verkleinert werden. Zum Beispiel kann zunächst durch einen Entscheider bzw. Vorentscheider (Slicer) 17 im kartesischen System mit einem halben Symbolversatz das durch vier Symbole begrenzte Quadrat bestimmt werden, in welchem der Empfangspunkt liegt. Anschließend wird nur die Minimaldistanz zu diesen vier Sollpunkten berechnet. Liegt der Empfangspunkt außerhalb der Sollfelder, so sind bei der Minimumbestimmung die vier Randsollpunkte zu prüfen, von denen zwei dem Empfangspunkt im kartesischen Raum am nächsten liegen und zwei einen höheren Radius haben. Eine solche Situation für 256-QAM ist Fig. 10 entnehmbar, in der zwei Empfangspunkte S und jeweils vier entsprechend zugeordnete Sollpunkte $S_e$ entnehmbar sind. Das rechtwinklige Gitter in der I/Q-Ebene in Fig. 10 legt die je vier zu prüfenden Sollpunkte für die zwei Empfangsbeispiele fest, bevor jeweils die Minimumbestimmung min$(u|R_S-R_{Se}|+|\alpha_S-\alpha_{Se}|)$ mit u = 4 zu diesen vier Punkten erfolgt.

**Patentansprüche**

1. Verfahren zum Entscheiden eines Symbols (Se) beim Empfang eines mit einem Quadratursignalpaar (I, Q) gekoppelten Signals (s), bei dem

- die Entscheidung durch Analyse des Abstandes (D) zumindest eines Empfangspunktes (S) zu zumindest einem Sollpunkt (Se) im komplexen Koordinatenraum (I, Q) getroffen wird

**dadurch gekennzeichnet , dass**

- der Abstand (D) im nicht oder nicht ausschließlich kartesischen komplexen Koordinatenraum analysiert und daraufhin die Entscheidung getroffen wird.

2. Verfahren nach Anspruch 1, bei dem der Abstand (D) im polaren Koordinatenraum $(R, \alpha)$ analysiert wird.

3. Verfahren nach Anspruch 2, bei dem

- der kartesische Koordinatenraum (I, Q) in den polaren Koordinatenraum $(R, \alpha)$ transformiert wird,
- im polaren Koordinatenraum die Analyse der Abstände (D) durchgeführt und
- eine Rücktransformation in den kartesischen Raum (I, Q) durchgeführt wird.

4. Verfahren nach einem vorstehenden Anspruch, bei dem im nicht-kartesischen Koordinatenraum als Abstand (D) der euklidische Abstand zwischen Empfangs- und Sollpunkten analysiert wird, insbesondere gemäß min(SQRT $(u \cdot (R_S - R_{Se})^2 + (\alpha_S - \alpha_{Se})^2))$.

5. Verfahren nach einem vorstehenden Anspruch, bei dem im nicht-kartesischen Koordinatensystem die Summe der Winkelund Radius-Projektionen des Abstandes zwischen Empfangspunkt und zumindest einem Sollpunkt analysiert wird, insbesondere gemäß $\min(u|R_S-R_{Se}|+|\alpha_S-\alpha_{Se}|)$.

6. Verfahren nach Anspruch 4 oder 5, bei dem zur Analyse des Abstands ein Wichtungsfaktor (u) zur Wichtung eines Radiusfehlers und/oder ein Wichtungsfaktor (w) zur Wichtung eines Winkelfehlers zur Wichtung von Radius- und Phasenfehler im Verhältnis zueinander verwendet wird.

7. Verfahren nach Anspruch 6, bei dem der Wichtungsfaktor oder die Wichtungsfaktoren (u, w) dynamisch an die Empfangsbedingungen des Signals (s) angepasst werden.

8. Verfahren nach einem der Ansprüche 4 - 7, bei dem eine Kombination verschiedenartiger Minimierungsverfahren zur Bestimmung des Abstandes im nicht-kartesischen Raum durchgeführt wird, insbesondere eine Kombination der Bestimmung eines euklidischen Abstandes des Empfangspunktes zu mindestens einem Sollpunkt einerseits und andererseits der Bestimmung der Summe der Winkel- und Radius-Projektionen des Abstandes zwischen dem Empfangspunkt und zumindest dem einen Sollpunkt analysiert wird, insbesondere gemäß $\sqrt{u(R_S - R_{Se})^2 + w(\alpha_S - \alpha_{Se})^2} + \sqrt{(I_S - I_{Se})^2 + (Q_S - Q_{Se})^2}$.

9. Verfahren nach einem vorstehenden Anspruch, bei dem bei der Analyse des Abstandes (D) eine Kombination von Verfahren zur Minimierung des Abstandes zwischen einem Empfangspunkt und zumindest einem Sollpunkt von einerseits zumindest einem Verfahren zur Minimierung im nicht-kartesischen Raum und andererseits einem Verfahren zur Minimierung des Abstands im kartesischen Raum durchgeführt wird, insbesondere gemäß $\min(u|R_S - R_{Se}|+w|\alpha_S - \alpha_{Se}| + v\sqrt{(I_S - I_{Se})^2 + (Q_S - Q_{Se})^2}$.

10. Verfahren nach Anspruch 9, bei dem ein Wichtungsfaktor (v) zur Wichtung des Einflusses der Bestimmung im kartesischen Raum im Verhältnis zur Bestimmung im nicht-kartesischen Raum festgelegt wird.

11. Schaltungsanordnung zum Entscheiden eines Symbols (S) beim Empfang eines mit einem Quadratursignalpaar (I, Q) gekoppelten Signals (s), mit

- einem Koordinatenumsetzer (20) zum Umsetzen des Signals aus kartesischen Koordinaten (I, Q) in nicht-kartesische Koordinaten $(R, \alpha)$,
- einer Vorentscheidungseinrichtung (17) zum Bestimmen eines minimalen Abstands zwischen einem Empfangspunkt (S) und zumindest einem entsprechenden Sollpunkt (Se) anhand des kartesischen Signals,
- einer Entscheidungseinrichtung (15) zum Entscheiden eines Symbols aufgrund der Abstandsanalyse und
- einer Steuereinrichtung zum Steuern der Schaltungsanordnung und eines Verfahrensablaufs, insbesondere Verfahrensablauf nach einem der vorstehenden Ansprüche.

Fig. 1

$$\min \sqrt{(R_s - R_{se})^2 + (\alpha_s - \alpha_{se})^2}$$

Fig. 2

$$\min \sqrt{4(R_s - R_{se})^2 + (\alpha_s - \alpha_{se})^2}$$

Fig. 3

$$\min \sqrt{4\left(\beta_s - \beta_{se}\right)^2 + \left(\alpha_s - \alpha_{se}\right)^2}$$

Fig. 4

$$\min \sqrt{(\beta_s - \beta_{se})^2 + (\alpha_s - \alpha_{se})^2}$$

Fig. 5

$$\min \left(2 \cdot |R_s - R_{se}| + |\alpha_s - \alpha_{se}|\right)$$

Fig. 6

$$\min \left(2 \cdot |R_s - R_{se}| + |\alpha_s - \alpha_{se}|\right)$$

Fig. 7

256 QAM

mittlere
Regelspannung

Gitterentscheidung

Winkelabweichung

R/α – Entscheidung
R – Vorfaktor 4 :
$\min\left(4\,|R_s - R_{se}| + |\alpha_s - \alpha_{se}|\right)$

Fig. 8

$$\min\left(2|R_S - R_{se}| + |\alpha_S - \alpha_{se}| + 0{,}5\sqrt{(I_S - I_{se})^2 + (Q_S - Q_{se})^2}\right)$$

Fig. 9

$$\min \left( 4 |R_s - R_{se}| + |\alpha_s - \alpha_{se}| \right) \qquad 256 \; QAM$$

Fig. 10

FIG 11

# FIG 13

Regelspannung

Häufigkeit

-45°

0°

0°

45°

Winkelabweichung (-45...+45 Grad)

# FIG 12

einzelne Regelspannung / rad

0,75

0,5

0,25

-0,25

-0,5

-0,75

R

Winkelabweichung (-45...+45 Grad)

Fig. 14

Fig. 15

Fig. 16